# EUROPÄISCHE PATENTSCHRIFT

(11) **EP 4 013 622 B1**
(45) Veröffentlichungstag und Bekanntmachung des Hinweises auf die Patenterteilung: **23.04.2025**
(21) Anmeldenummer: 20744025.6
(22) Anmeldetag: 22.07.2020
(51) Int. Cl.: B42D 25/324, B42D 25/351, B42D 25/23, B42D 25/455, B42D 25/46, B42D 25/405, B42D 13/00, B29C 64/00, B33Y 10/00, B33Y 80/00

(54) **WERT- ODER SICHERHEITSDOKUMENT UND VERFAHREN ZU DESSEN HERSTELLUNG**
DOCUMENT OF VALUE OR SECURITY DOCUMENT AND METHOD FOR THE PRODUCTION THEREOF
DOCUMENT DE VALEUR ET/OU DE SÉCURITÉ ET SON PROCÉDÉ DE FABRICATION

(30) Priorität: 13.08.2019 DE 102019121831
(43) Veröffentlichungstag der Anmeldung: 22.06.2022
(73) Patentinhaber: Bundesdruckerei GmbH, 10969 Berlin (DE)
(72) Erfinder: BIELESCH, Ulrich, 56132 Frücht (DE); MAUDERER, Michael, 81825 München (DE)
(74) Vertreter: Mammel und Maser Patentanwälte PartG mbB
(86) Internationale Anmeldenummer: PCT/EP2020/070619
(87) Internationale Veröffentlichungsnummer: WO 2021/028168

(56) Entgegenhaltungen:
- WO-A1-2014/131647
- WO-A1-2018/046582
- US-A1- 2016 332 477
- US-A1- 2018 257 324

## Beschreibung

Die Erfindung betrifft ein Wert- oder Sicherheitsdokument sowie ein Verfahren zu dessen Herstellung, welches aus mehreren Schichten besteht, die zu einem Verbundkörper miteinander verbunden sind.

Aus der WO 2009/156 183 A1 ist ein Wert- oder Sicherheitsdokument bekannt. Dieses Wert- oder Sicherheitsdokument ist als ein kartenförmiges Dokument durch Lamination aus mehreren Schichten hergestellt. Dieses Wert- oder Sicherheitsdokument weist mindestens ein Sicherheitsmerkmal auf. Dieses wird durch einen Teilbereich in einer Stirnkante des Sicherheitsdokuments gebildet. Gemäß einer Ausführungsform umfasst das Dokument eine Vielzahl von parallel zueinander ausgerichteten Linien, die sich über mehrere Schichten an der Stirnkante des Dokumentes von außen sichtbar erstrecken. Diese Linien können durch einen Lumineszenzfarbstoff gebildet sein. Des Weiteren kann an dem Dokument an der Außenkontur eine Einfräsung vorgesehen sein, die sich über alle Stirnkanten der Schichten erstreckt. Diese Einfräsung wird darauffolgend mit einem Lumineszenzfarbstoff gefüllt. Bei einer Delamination der einzelnen Schichten und einem darauffolgenden Zusammenfügen wird bei beiden Ausführungsformen eine Veränderung der eingebrachten Sicherheitsmerkmale sichtbar.

Aus der EP 1 970 211 A1 geht des Weiteren ein Sicherheitsdokument hervor, welches aus mehreren Schichten besteht. Ein oder mehrere Stirnseiten des Dokumentes werden mit Daten markiert, insbesondere mit Text, Linien oder einem Logo. Sofern ein Ablösen oder ein Austausch von einer Schicht erfolgt, wird dies sichtbar, da die ursprünglich aufgedruckte und aufgebrachte Markierung verändert ist. Dieses Verfahren weist den Nachteil auf, dass zum einen die Bearbeitung der schmalen Stirnseite schwierig ist und zum anderen kann durch eine Neugestaltung der Stirnseite und einer anschließenden Aufbringung der Markierung eine Manipulation unsichtbar gemacht werden, da die Markierung kopiert werden kann.

Aus der US 2016/0332477 A1 ist ein Wert- oder Sicherheitsdokument mit einem Datenträger bekannt, der aus mehreren Schichten gebildet ist. In einer mittleren Schicht ist eine Ausnehmung vorgesehen, in welcher ein 3D-Objekt eingesetzt ist.

Aus der WO 2014/131647 A1 geht ein Sicherheitselement für ein Wert- oder Sicherheitsdokument hervor, welches zur Erzielung einer höheren Fälschungssicherheit eine Matrix aus einer Vielzahl von einzeln nacheinander aufgebrachten Volumenelementen aufweist.

Aus der US 2018/0257324 A1 ist ein Verfahren zur Herstellung von Bildern mit einer Linsenstruktur bekannt.

Die WO 2018/046582 A1 offenbart ein thermoplastisches Polymerpulver sowie deren Verwendung als Werkstoff für das selektive Lasersintern.

Der Erfindung liegt die Aufgabe zugrunde, ein Wert- oder Sicherheitsdokument sowie ein Verfahren zu dessen Herstellung vorzuschlagen, durch welche die Manipulation erschwert oder verhindert wird.

Diese Aufgabe wird durch ein in Anspruch 1 definiertes Wert- oder Sicherheitsdokument gelöst. Dadurch ist ermöglicht, dass unmittelbar beim Aufbringen der dreidimensionalen Struktur durch den additiven Druck eine stoffschlüssige Verbindung mit der Schicht erfolgt, auf welche die dreidimensionale Struktur aufgebracht ist. Bei einem Entfernen der dreidimensionalen Struktur kann aufgrund der stoffschlüssigen Verbindung die Manipulation sichtbar werden.

Eine bevorzugte Ausführungsform des Wert- oder Sicherheitsdokumentes sieht vor, dass bei dem auf die zumindest eine Schicht des Datenträgers die dreidimensionale Struktur aus einem Kunststoffmaterial durch einen additiven Druck aufgebracht ist und auf die dreidimensionale Struktur zumindest eine weitere Schicht aus Kunststoff aufgebracht ist, wobei die Schichten aus Kunststoff zur Bildung des Verbundkörpers eine Glasübergangstemperatur aufweisen, welche kleiner ist als die Glasübergangstemperatur des Kunststoffmaterials der dreidimensionalen Struktur ist. Dies ermöglicht, dass einerseits die Schichten aus Kunststoff durch Laminieren zu einem Verbundkörper fest miteinander verbunden sind und andererseits die dreidimensionale Struktur nach dem Laminieren innerhalb des Verbundkörpers erhalten bleibt. Diese dreidimensionale Struktur, welche durch das additive Druckverfahren hergestellt ist, unterscheidet sich von einem herkömmlichen Druck und ist als solche gut erkennbar. Auch kann diese dreidimensionale Struktur aus dem Kunststoffmaterial nicht durch ein herkömmliches Druckverfahren kopiert werden.

Bevorzugt ist vorgesehen, dass die dreidimensionale Struktur durch Punkte, Linien, Flächenabschnitte, Symbole und/oder geometrische Formen ausgebildet ist. Die Gestaltungsmöglichkeiten, Anordnungsmöglichkeiten und Kombinationsmöglichkeiten sind beliebig und können anwendungsspezifisch ausgewählt werden. Auch kann diese dreidimensionale Struktur in Kombination mit weiteren Elementen und/oder Sicherheitsmerkmalen stehen. Vorzugsweise können Pigmente und/oder lumineszierende Farbstoffe in die dreidimensionale Struktur eingebracht sein.

Vorteilhafterweise erstreckt sich die dreidimensionale Struktur auf der zumindest einen Schicht bis an eine Stirnseite der Schichten und grenzt an diese an. Dadurch ist diese dreidimensionale Struktur von außen sichtbar.

Des Weiteren kann vorgesehen sein, dass auf die dreidimensionale Struktur zumindest eine Schicht aufgebracht ist, welche transparent oder in Abschnitten transparent ausgebildet ist. Diese aufgebrachte Schicht kann eine Deckschicht oder Schutzschicht sein. Dadurch kann die dreidimensionale Struktur innerhalb einer flächigen Erstreckung des Datenträgers von außen sichtbar sein. Diese dreidimensionale Struktur ist jedoch aufgrund der zumindest einen darauf aufliegenden Schicht geschützt.

Zwischen einer ersten und einer zweiten Schicht des Verbundkörpers ist eine erste dreidimensionale Struktur eingebracht und zwischen zwei weiteren Schichten ist eine weitere dreidimensionale Struktur eingebracht. Somit können ein oder mehrere dreidimensionale Strukturen in einer oder mehreren Ebenen des Datenträgers zwischen zwei Schichten des Verbundkörpers vorgesehen sein, wodurch auch eine definierte Anordnung geschaffen werden kann, welche von außen sichtbar ist.

Des Weiteren kann alternativ vorgesehen sein, dass auf die dreidimensionale Struktur zumindest eine opake Schicht mit zumindest einem transparenten Fenster aufgebracht ist und die dreidimensionale Struktur sich zumindest teilweise in das eine transparente Fenster erstreckt. Auch eine solche Anordnung kann durch ein Kopierverfahren nicht reproduziert werden.

Vorteilhafterweise kann die dreidimensionale Struktur auch eine beliebige Kombination der vorgenannten Ausgestaltungsmöglichkeit umfassen.

Bevorzugt ist die dreidimensionale Struktur aus einem einheitlichen Kunststoffmaterial hergestellt. Alternativ können auch mehrere voneinander abweichende Kunststoffmaterialien eingesetzt werden, welche beispielsweise in der Farbe, in Zusätzen und/oder in Beimischungen oder dergleichen voneinander abweichen. Beispielsweise können Pigmente und/oder Lumineszenzfarbstoffe in das oder die Kunststoffmaterialien für die dreidimensionale Struktur eingebracht sein.

Die zwischen zwei Schichten aus Kunststoff angeordnete dreidimensionale Struktur weist bevorzugt eine Höhe auf, welche kleiner als die Dicke der beiden aneinandergrenzenden Schichten aus Kunststoff ist. Dadurch wird ein vollständiges Einbinden der dreidimensionalen Struktur ermöglicht.

Alternativ kann vorgesehen sein, dass die dreidimensionale Struktur, welche auf eine Schicht aus Papier, Pappe oder Karton aufgebracht ist, in der Höhe kleiner ausgebildet ist als die Dicke der Schicht aus Kunststoff, welche die dreidimensionale Struktur überdeckt. Auch dadurch können ein Schutz und eine Absicherung der dreidimensionalen Struktur durch die darauf aufliegende Schicht erzielt werden.

Bevorzugt ist die dreidimensionale Struktur mit einer Höhe von weniger als 0,2 mm, vorzugsweise weniger als 0,05 mm, ausgebildet. Dadurch lassen sich diese Strukturen in einen bisherigen Aufbau eines Verbundkörpers aus mehreren Schichten aus Kunststoff ohne Beeinträchtigung der gesamten Aufbauhöhe einbringen.

Vorteilhafterweise ist die dreidimensionale Struktur aus einem hochtemperaturbeständigen thermoplastischen Kunststoff, insbesondere Polyetheretherketon (PEEK) ausgebildet. Die weiteren Schichten aus Kunststoff bestehen aus einem thermoplastischen Kunststoff mit einer niedrigeren Temperaturbeständigkeit. Dadurch bleibt die dreidimensionale Struktur während des Laminierens der Schichten zu dem Verbundkörper erhalten.

Des Weiteren ist bevorzugt die dreidimensionale Struktur, welche auf eine äußerste Schicht des Verbundkörpers aufgebracht ist, als eine Brailleschrift ausgebildet.

Die der Erfindung zugrundeliegende Aufgabe wird des Weiteren durch ein in Anspruch 13 definiertes Verfahren zur Herstellung eines Wert- oder Sicherheitsdokumentes gelöst. Durch das Aufbringen einer dreidimensionalen Struktur mittels additivem Druck wird das Kunststoffmaterial auf eine Temperatur aufgeheizt, welche unmittelbar beim Aufbringen der dreidimensionalen Struktur auf die zumindest eine Schicht ein zumindest teilweises Anschmelzen der Schicht ermöglicht, sodass eine stoffschlüssige Verbindung erzielt wird.

Bevorzugt ist vorgesehen, dass auf die zumindest eine Schicht mit der aufgedruckten dreidimensionalen Struktur zumindest eine weitere Schicht aus Kunststoff aufgebracht wird und dass die Schichten aus Kunststoff zu dem Verbundkörper laminiert werden, wobei die dreidimensionale Struktur nach dem Laminieren erhalten bleibt. Dadurch kann in einfacher Weise durch das Aufbringen einer dreidimensionalen Struktur mit einem additiven Druckverfahren ein Sicherheitsmerkmal in das Wert- oder Sicherheitsdokument eingebracht werden. Ein solches Sicherheitsmerkmal ist durch ein übliches Druckverfahren oder Kopierverfahren nicht zu reproduzieren.

Bevorzugt ist vorgesehen, dass die dreidimensionale Struktur durch eine oder mehrere aufgebrachte Schichten aus einem oder voneinander abweichenden Kunststoffmaterialien hergestellt wird. Dadurch kann die dreidimensionale Struktur in der Höhe variabel ausgestaltet sein. Zudem kann auch noch die Fälschungssicherheit der dreidimensionalen Struktur erhöht werden.

Des Weiteren ist bevorzugt vorgesehen, dass eine Temperatur zum Laminieren der Schichten zu einem Verbundkörper angesteuert wird, welche kleiner als die Glasübergangstemperatur des Kunststoffmaterials für die dreidimensionale Struktur ist. Dadurch bleibt die dreidimensionale Struktur auch nach der Lamination der Schichten zu dem Verbundkörper unverändert erhalten.

Des Weiteren ist bevorzugt vorgesehen, dass die dreidimensionale Struktur durch Punkte, Linien, Flächenabschnitte, Symbole und/oder geometrische Formen ausgebildet wird. Dadurch ist eine vielfältige Gestaltung und Anpassung an weitere Merkmale auf dem Datenträger möglich.

Die dreidimensionale Struktur wird bevorzugt auf die zumindest eine Schicht derart aufgedruckt, dass eine Stirnseite eines Druckabschnitts der dreidimensionalen Struktur bündig zu einer Stirnseite der zumindest einen Schicht ist. Dadurch kann nach dem Laminieren zumindest ein Teil der dreidimensionalen Struktur von außen sichtbar sein.

Des Weiteren ist bevorzugt vorgesehen, dass eine transparente Schicht oder eine in Flächenabschnitten transparente Schicht auf die dreidimensionale Struktur aufgebracht wird. Dadurch kann ein Verlauf der dreidimensionalen Struktur auf der zumindest einen Schicht vollständig, abschnittsweise oder abschnittsweise aufeinanderfolgend sichtbar sein. Des Weiteren kann vorgesehen sein, dass eine opake Schicht mit zumindest einem transparenten Fenster auf die dreidimensionale Struktur aufgebracht wird, um einen zwischen zwei Schichten eingeschlossenen Bereich, in dem die dreidimensionale Struktur eingebracht ist, von außen sichtbar zu machen.

Bevorzugt ist die dreidimensionale Struktur aus einem einheitlichen Kunststoffmaterial aufgebaut. Dadurch kann eine kosten- und zeitoptimierte Herstellung erfolgen. Bei erhöhten Anforderungen an die Sicherheit können auch mehrere verschiedene Kunststoffmaterialien zur Herstellung der dreidimensionalen Struktur eingesetzt werden. Diese Kunststoffmaterialien können in der Farbe und/oder in den Zusätzen, wie beispielsweise Pigmente, Lumineszenzfarbstoffe oder dergleichen, voneinander abweichen.

Bei einem Datenträger, der durch Laminieren von Schichten aus Kunststoffen hergestellt wird, kann die dreidimensionale Struktur eine Höhe zwischen den zwei Schichten aus Kunststoff aufweisen, welche kleiner ist als die Dicke der beiden Schichten. Dadurch kann ein sicheres Einbinden der dreidimensionalen Struktur zwischen den zwei Schichten ermöglicht sein.

Alternativ kann der Verbundkörper beispielsweise eine Schicht aus Papier, Pappe oder Karton aufweisen und diese Schicht als innenliegende Schicht beidseitig eine Schicht aus Kunststoff aufnehmen, um die Schicht aus Papier, Pappe oder Karton einzuhüllen. Sofern die dreidimensionale Struktur auf eine Schicht aus Papier, Pappe oder Karton aufgebracht wird, ist die Höhe der dreidimensionalen Struktur vorzugsweise kleiner als die auf die Schicht aus Papier, Pappe oder Karton aufgebrachte Schicht.

Vorteilhafterweise wird die dreidimensionale Struktur mit einer Höhe von weniger als 0,2 mm, vorzugsweise weniger als 0,05 mm, aufgebracht.

Insbesondere ist für die Herstellung der dreidimensionalen Struktur ein hochtemperaturbeständiger thermoplastischer Kunststoff, insbesondere Polyetheretherketon (PEEK) vorgesehen, der auf die zumindest eine Schicht aus Kunststoff mit einer niedrigen Glasübergangstemperatur aufgebracht wird.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
Figur 1 eine perspektivische Ansicht einer ersten Ausführungsform eines Wert- oder Sicherheitsdokumentes,
Figur 2 eine perspektivische Ansicht einer alternativen Ausführungsform zu Figur 1,
Figur 3 eine perspektivische Ansicht einer alternativen Ausführungsform zu Figur 1,
Figur 4 eine perspektivische Ansicht einer weiteren alternativen Ausführungsform zu Figur 1, und
Figur 5 eine perspektivische Ansicht einer erfindungsgemäßen Ausführungsform eines Wert- oder Sicherheitsdokumentes.

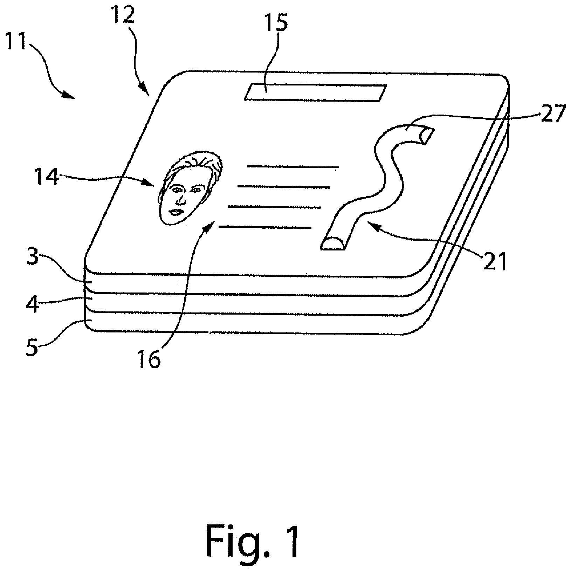

**In** Figur 1 ist perspektivisch eine erste Ausführungsform eines Wert- oder Sicherheitsdokuments 11 dargestellt. Dieses Wert- oder Sicherheitsdokument 11 besteht aus einem Datenträger 12 mit einer oberen Schicht 3 sowie einer unteren Schicht 5 und einer dazwischenliegenden oder inneren Schicht 4. Die oberen und/oder unteren Schichten 3, 5 können auch aus einer oder mehreren Einzelschichten ausgebildet sein. Diese Schichten 3, 4, 5 bilden einen Verbundkörper, der durch Laminieren hergestellt ist. Die oberen und/oder unteren Schichten 3, 5 weisen eine außen umlaufende Stirnfläche 7 auf. Die innere Schicht 4 weist ebenfalls eine außen umlaufende Stirnfläche 8 auf. Die Stirnflächen 7, 8 bilden eine gemeinsame Außenkontur des Verbundkörpers. Diese gemeinsame Außenkontur kann nach Herstellung des Verbundkörpers durch Schneiden und/oder Stanzen hergestellt sein. Die Stirnflächen 7 der Schichten 3, 5 sowie die Stirnfläche 8 der innenliegenden Schicht 4 liegen bevorzugt in einer gemeinsamen Ebene.

Die oberen und/oder unteren Schichten 3, 5 zur Herstellung des Verbundkörpers können aus einem oder mehreren Materialien aus Kunststoff bestehen. Insbesondere umfassen diese Polycarbonat (PC) oder bestehen aus PC. Weitere Alternativen können sein: Bisphenol-A-Polycarbonat, Carboxy-modifiziertes PC, Polyethylenterephthalat (PET), dessen Derivaten wie Glycolmodifiziertem PET (PETG), Polyvinylchlorid (PVC), Polyvinylbutyral (PVB), Polymethylmethacrylat (PMMA), Polyimid (PI), Polybutylenterephthalat (PBT), Polyvinylalkohol (PVA), Polystyrol (PS), Polyvinylphenol (PVP), Polypropylen (PP), Polyethylen (PE), thermoplastischen Elastomeren (TPE), insbesondere thermoplastisches Polyurethan (TPU), Acrylnitril-Butadien-Styrol-Copolymer (ABS), und/oder deren Derivaten.

Gemäß einer ersten Ausführungsform ist die innenliegende Schicht 4 aus Kunststoff oder aus einem oder mehreren Materialien der vorbeschriebenen Schichten 3, 5 ausgebildet. Alternativ kann die innenliegende Schicht 4 auch aus Papier, Pappe oder Karton oder eine Mischung ausgebildet sein.

Das in Figur 1 dargestellte Wert- oder Sicherheitsdokument 11 kann als kartenförmiges Dokument, beispielsweise in einem ID-1-, ID-2- oder ID-3-Format ausgebildet sein. Ein solches Wert- oder Sicherheitsdokument 11 kann ein Personalausweis, Führerschein, Visum, Scheck-/Kreditkarte, Firmenausweis, Berechtigungsnachweis, Mitgliedsausweis, Gutschein oder dergleichen sein.

Der Datenträger 12 kann zur Personalisierung beispielsweise gemäß dem ICAO-Standard ausgebildet sein. Dieser umfasst ein Bild 14 des Dokumenteninhabers, einen maschinenlesbaren Bereich 15 sowie weitere Personalisierdaten 16, wie beispielsweise Name und Geburtsdatum.

Der Datenträger 12 kann des Weiteren auch ein Transpondermodul umfassen, in welchem die Daten des Dokumenteninhabers oder weitere Sicherheitsmerkmale gespeichert sind.

Im Ausführungsbeispiel gemäß Figur 1 ist auf der äußeren Schicht 3 eine dreidimensionale Struktur 21 vorgesehen. Diese dreidimensionale Struktur 21 ist bevorzugt durch ein additives Druckverfahren aufgebracht.

Diese dreidimensionale Struktur 21 kann aus Punkten, Linien, Symbolen und/oder weiteren geometrischen Formen ausgebildet sein. Im Ausführungsbeispiel gemäß Figur 1 ist vorgesehen, dass die dreidimensionale Struktur 21 beispielsweise aus einer geschwungenen Linie 27 besteht. Diese dreidimensionale Struktur 21 ist gegenüber der Ebene der äußeren Schicht 3 erhaben. Die Schichten 3, 4 und 5 können vor dem Aufbringen der dreidimensionalen Struktur 21 auf die äußere Schicht 3 bereits laminiert sein. Alternativ kann die dreidimensionale Struktur 21 auf die äußere Schicht 3 aufgedruckt werden, und im Anschluss daran kann eine Lamination der Schichten 3, 4 und 5 zu einem Verbundkörper erfolgen.

Die nachfolgend beschriebenen Ausführungsformen und Varianten als auch Gestaltungen der dreidimensionalen Struktur 21 können auch ausschließlich auf der äußere Schicht 3 des Datenträgers 12 beziehungsweise Verbundkörpers gemäß Figur 1 vorgesehen sein.

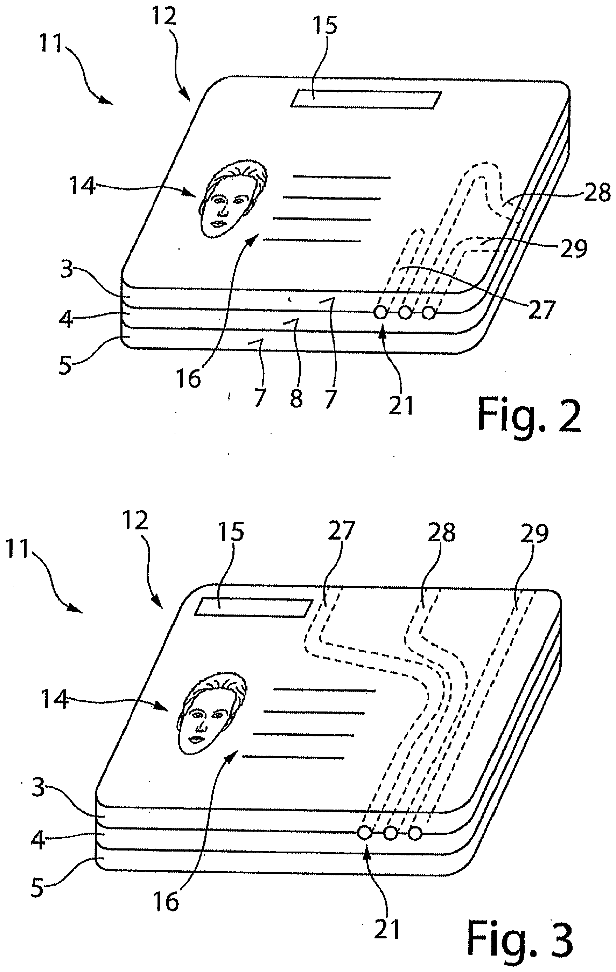

Im Ausführungsbeispiel gemäß Figur 2 ist zwischen der innenliegenden Schicht 4 und der äußeren Schicht 3 eine dreidimensionale Struktur 21 vorgesehen. Diese dreidimensionale Struktur 21 ist auf die innenliegende Schicht 4 aufgedruckt. Bevorzugt ist ein additives Druckverfahren zum Aufdrucken eines Kunststoffmaterials vorgesehen. Darauffolgend wird die äußere Schicht 3 aufgebracht, um daraufhin die Schichten 3, 4, 5 zu einem Verbundkörper zu laminieren.

Die dreidimensionale Struktur 21 kann aus Punkten, Linien, Symbolen und/oder weiteren geometrischen Formen ausgebildet sein. Im Ausführungsbeispiel gemäß Figur 2 ist vorgesehen, dass die dreidimensionale Struktur 21 sich beispielsweise aus drei Linien 27, 28, 29 zusammensetzt. Diese dreidimensionale Struktur 21, insbesondere die Linien 27, 28, 29 erstrecken sich bis zur Stirnseite 7, 8 der äußeren Schicht 3 und innenliegenden Schicht 4. Dadurch ist die dreidimensionale Struktur 21 nach dem Herstellen des Datenträgers 12 von außen sichtbar. Ausgehend von dieser sichtbaren Stirnseite 7, 8 der dreidimensionalen Struktur 21 kann sich diese in beliebiger Form und Weise in die flächige Erstreckung zwischen der Schicht 3 und der Schicht 4 erstrecken. Im Ausführungsbeispiel ist die äußere Schicht 3 im Bereich der dreidimensionalen Struktur 21 opak ausgebildet. Deshalb ist der Verlauf der dreidimensionalen Struktur 21 strichliniert im Durchlicht sichtbar.

Die dreidimensionale Struktur 21 kann an nur einer Stirnseite 7, 8 angrenzend vorgesehen sein, so dass diese sichtbar ist. Auch kann dreidimensionale Struktur 21 an zwei Stirnseiten des Verbundkörpers sichtbar sein, wie dies in Figur 1 dargestellt ist, oder auch an mehreren Stirnseiten des Verbundkörpers sichtbar sein.

Die Querschnittsgeometrie der dreidimensionalen Struktur 21 kann sowohl rund als auch halbkreisförmig oder auch weitere Geometrien umfassen.

Die dreidimensionale Struktur 21 wird bevorzugt durch ein additives Druckverfahren auf die zumindest eine Schicht 3, 4, 5 aufgebracht. Bevorzugt wird das Kunststoffmaterial angeschmolzen und über eine Düse ausgetragen. Alternativ kann auch ein Kunststoffpulver und/oder flüssiger Epoxidharz auf die Schichten 3, 4, 5 aufgebracht werden, welches anschließend mit einem Laserstrahl verfestigt wird. Insbesondere wird die dreidimensionale Schicht 21 als Mikrostruktur aufgebracht, beispielsweise mit einer Strukturstärke, insbesondere Linienstärke kleiner als 0,1 mm, insbesondere kleiner als 0,05 mm, ist. Diese dreidimensionale Struktur 21 wird aus einem hochtemperaturbeständigen thermoplastischen Kunststoff hergestellt. Vorzugsweise ist PEEK vorgesehen.

Durch den Einsatz eines Kunststoffes für die Schichten 3, 4, 5 bzw. des Einsatzes von Papier, Pappe und/oder Karton für die innenliegende Schicht 4 kann nach dem Laminieren der Schichten 3, 4, 5 zu einem Verbundkörper die dreidimensionale Struktur 21 in der aufgedruckten Gestalt verbleiben. Die Laminiertemperatur für die Herstellung des Verbundkörpers ist vorzugsweise kleiner als die Glasübergangstemperatur des Kunststoffmaterials zur Herstellung der dreidimensionalen Struktur 21.

In Figur 3 ist eine alternative Ausführungsform zu Figur 2 dargestellt. Diese alternative Ausführungsform unterscheidet sich dadurch, dass die äußere Schicht 3 als transparente Schicht 3 ausgebildet ist. Diese äußere Schicht 3 kann auch nur in dem Bereich der dreidimensionalen Struktur 21 transparent ausgebildet sein. Dadurch ist die dreidimensionale Struktur 21 sowohl an der Stirnkante 7, 8 als auch bei der Betrachtung auf die Datenseite des Datenträgers erkennbar.

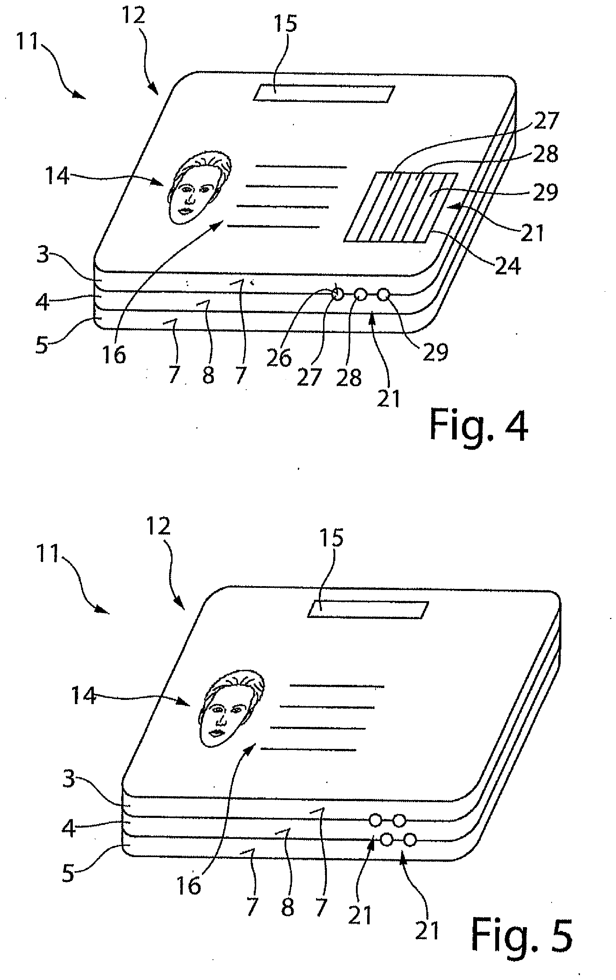

In Figur 4 ist eine alternative Ausgestaltung des Wert- oder Sicherheitsdokumentes 11 dargestellt. Die äußere Schicht 3 ist opak ausgebildet und weist beispielsweise ein transparentes Fenster 24 auf, durch welches die dreidimensionale Struktur 21 einsehbar ist. Auch ist die dreidimensionale Struktur 21 an der Stirnseite 7, 8 der Schichten 3, 4 zu erkennen. Diese dreidimensionalen Strukturen 21 gemäß Figur 3 können unabhängig voneinander ausgebildet sein. Auch kann eine Verknüpfung der beiden dreidimensionalen Strukturen 21 vorgesehen sein, indem beispielsweise eine Stirnseite 26 einer Linie 27 der dreidimensionalen Struktur 21 sich von der Stirnseite 7, 8 der Schichten 3, 4 bis in das Fenster 24 hinein erstreckt. Die benachbarte Linie 28 kann analog ausgebildet sein. Vorzugsweise weicht diese Linie 28 in der Farbe oder in dem äußeren Querschnitt von der ersten Linie 27 ab. Analoges kann für die dritte Linie 29 gelten.

Auch kann eine der Linien 27, 28, 29 zwischen der innenliegenden Schicht 4 und der unteren Schicht 5 vorgesehen sein. Sofern die innenliegende Schicht 4 ebenfalls ein transparentes Fenster 24 wie die äußere Schicht 3 aufweist, kann auch eine dieser Linien 27, 28, 29 zwischen der unteren Schicht 5 und der innenliegenden Schicht 4 durch eine Draufsicht auf den Datenträger 12 erkannt werden. Somit sind von außen dreidimensionale Strukturen 21 in unterschiedlichen Ebenen des Datenträgers 12 sichtbar.

In Figur 5 ist eine erfindungsgemäße Ausführungsform des Wert- oder Sicherheitsdokumentes 11 dargestellt. Beispielsweise ist eine dreidimensionale Struktur 21 zwischen der äußeren Schicht 3 und der innenliegenden Schicht 4 vorgesehen. Ebenso ist eine dreidimensionale Struktur 21 zwischen der innenliegenden Schicht 4 und der äußeren unteren Schicht 5 vorgesehen. Die dreidimensionalen Strukturen 21 können an die Stirnseite 7, 8 angrenzen und sichtbar sein. Diese dreidimensionalen Strukturen 21 können in einer bestimmten Art und Weise einander zugeordnet sein, um beispielsweise ein Muster oder auch ein Sicherheitsmerkmal an der Außenkontur des Datenträgers 12 zu bilden.

Beispielsweise können die dreidimensionalen Strukturen 21, welche in Form von Linien, Flächenabschnitten oder dergleichen ausgebildet sind, auch mit metallischen oder sonstigen Partikeln versehen sein. Bei einer äußeren opaken Schicht kann mittels einem entsprechenden Lesegerät der Verlauf, die Kontur und/oder die Gestalt einer solchen dreidimensionalen Struktur 21 erkannt und auf die Echtheit hin überprüft werden.

### Bezugszeichenliste

3. äußere Schicht
4. innenliegende Schicht
5. äußere Schicht
7. Stirnseite
8. Stirnseite
11. Wert- oder Sicherheitsdokument
12. Datenträger
14. Bild
15. maschinenlesbare Zeile
16. Personalisierdaten
21. dreidimensionale Struktur
24. Fenster
26. Stirnseite
27. Linie
28. Linie
29. Linie

## Patentansprüche

1. Wert- oder Sicherheitsdokument (11) mit einem Datenträger (12), der aus mehreren Schichten (3, 4, 5) gebildet ist, wobei zumindest zwei Schichten (3, 4, 5) aus Kunststoff bestehen und die Schichten (3, 4,5) einen Verbundkörper bilden,
- wobei auf die zumindest eine Schicht (3, 4, 5) eine dreidimensionale Struktur (21) aus einem Kunststoffmaterial durch einen additives Verfahren aufgebracht ist, und
- wobei die Schichten (3, 4, 5) aus Kunststoff zur Bildung des Verbundkörpers eine Glasübergangstemperatur aufweisen, welche kleiner als die Glasübergangstemperatur des Kunststoffmaterials der dreidimensionalen Struktur (21) ist, **dadurch gekennzeichnet, dass** zwischen der ersten und der zweiten Schicht (3, 4; 4, 5) eine erste dreidimensionale Struktur (21) und zwischen der zweiten und einer weiteren Schicht (4,5; 3,4) oder zwei weiteren Schichten eine zumindest weitere dreidimensionale Struktur (21) vorgesehen ist.

2. Wert- oder Sicherheitsdokument nach Anspruch 1, **dadurch gekennzeichnet, dass** auf die dreidimensionale Struktur (21) zumindest eine weitere Schicht (4, 5, 3) aus Kunststoff aufgebracht ist, welche eine Glasübergangstemperatur aufweist, die kleiner als die Glasübergangstemperatur des Kunststoffmaterials der dreidimensionalen Struktur (21) ist.

3. Wert- oder Sicherheitsdokument nach Anspruch 1 oder 2, **dadurch gekennzeichnet, dass** die dreidimensionale Struktur (21) durch Punkte, Linien, Flächenabschnitte, Symbole und/oder geometrische Formen ausgebildet ist und vorzugsweise Farbpigmente und/oder lumineszierende Pigmente enthält.

4. Wert- oder Sicherheitsdokument nach einem der vorhergehenden Ansprüche, **dadurch gekennzeichnet, dass** die dreidimensionale Struktur (21) auf der zumindest einen Schicht (3, 4, 5) an zumindest eine Stirnseite (7, 8) der Schichten (3, 4, 5) angrenzt.

5. Wert- oder Sicherheitsdokument nach einem der vorhergehenden Ansprüche, **dadurch gekennzeichnet, dass** die dreidimensionale Struktur auf zumindest eine Schicht (3, 4, 5) aufgebracht ist und die darauf aufliegende weitere Schicht (4, 5, 3) transparent oder in Abschnitten transparent ausgebildet ist.

6. Wert- oder Sicherheitsdokument nach einem der Ansprüche 1 bis 3, **dadurch gekennzeichnet, dass** die dreidimensionale Struktur (21) auf zumindest eine Schicht (3, 4, 5) aufgebracht ist und die darauf aufliegende weitere Schicht (4, 5, 3) opak mit zumindest einem transparenten Fenster (24) ausgebildet ist und die dreidimensionale Struktur (21) sich zumindest teilweise in das transparente Fenster (24) erstreckt.

7. Wert- oder Sicherheitsdokument nach einem der vorhergehenden Ansprüche, **dadurch gekennzeichnet, dass** die dreidimensionale Struktur (21) aus einem einheitlichen Kunststoffmaterial oder aus mehreren voneinander abweichenden Kunststoffmaterialien ausgebildet ist.

8. Wert- oder Sicherheitsdokument nach einem der vorhergehenden Ansprüche, **dadurch gekennzeichnet, dass** die dreidimensionale Struktur (21) eine Höhe zwischen zwei Schichten (3, 4; 4, 5) aufweist, welche kleiner als die Dicke der beiden aneinandergrenzenden Schichten (3, 4; 4, 5) ist.

9. Wert- oder Sicherheitsdokument nach einem der Ansprüche 1 bis 7, **dadurch gekennzeichnet, dass** die dreidimensionale Struktur (21) mit einer Höhe auf eine Schicht aus Papier, Pappe oder Karton aufgebracht wird, welche kleiner als die Dicke der Schicht (3, 4, 5) aus Kunststoff ist, welche auf die dreidimensionale Struktur (21) aufgebracht ist.

10. Wert- oder Sicherheitsdokument nach einem der vorhergehenden Ansprüche, **dadurch gekennzeichnet, dass** die dreidimensionale Struktur (21) mit einer Höhe von weniger als 0,2 mm, vorzugsweise weniger als 0,05 mm, aufgebracht ist.

11. Wert- oder Sicherheitsdokument nach einem der vorhergehenden Ansprüche, **dadurch gekennzeichnet, dass** die dreidimensionale Struktur (21) aus einem hochtemperaturbeständigen thermoplastischen Kunststoff, insbesondere PEEK, besteht und zumindest eine die dreidimensionale Struktur (21) überdeckende Schicht (3, 4, 5) aus Kunststoff eine Glasübergangstemperatur aufweist, die niedriger als die von dem hochtemperaturbeständigen thermoplastischen Kunststoff, insbesondere PEEK, ist.

12. Wert- oder Sicherheitsdokument nach einem der vorhergehenden Ansprüche, **dadurch gekennzeichnet, dass** auf die zumindest eine Schicht (3, 4, 5) eine Brailleschrift als dreidimensionale Struktur (21) aufgebracht wird.

13. Verfahren zur Herstellung eines Wert- oder Sicherheitsdokumentes (11), bei dem ein Datenträger (12) aus mehreren Schichten (3, 4, 5) gebildet wird, wobei zumindest zwei Schichten (3, 4, 5) aus einem Kunststoff bestehen und die zumindest zwei Schichten (3, 4, 5) miteinander zu einem Verbundkörper verbunden werden,
- wobei auf die zumindest eine Schicht (3, 4, 5) eine dreidimensionale Struktur (21) aus einem Kunststoffmaterial mit einem additiven Verfahren aufgebracht wird, dessen Glasübergangstemperatur höher als die Glasübergangstemperatur der aus Kunststoff bestehenden Schichten (3, 4, 5) zur Bildung des Verbundkörpers ist, **dadurch gekennzeichnet, dass** zwischen der ersten und der zweiten Schicht (3, 4; 4, 5) eine erste dreidimensionale Struktur (21) und zwischen der zweiten und einer weiteren Schicht (4,5; 3,4) oder zwei weiteren Schichten eine zumindest weitere dreidimensionale Struktur (21) vorgesehen wird.

14. Verfahren nach Anspruch 13, **dadurch gekennzeichnet, dass** auf die mit der dreidimensionalen Struktur (21) bedruckte Schicht (3, 4, 5) zumindest eine weitere Schicht (4, 5, 3) aus Kunststoff aufgebracht wird, und dass die Schichten (3, 4, 5) aus Kunststoff zu dem Verbundkörper laminiert werden, wobei die dreidimensionale Struktur (21) nach dem Laminieren erhalten bleibt.

15. Verfahren nach Anspruch 13 oder 14, **dadurch gekennzeichnet, dass** eine Temperatur zum Laminieren der Schichten (3, 4, 5) zum Verbundkörper angesteuert wird, welche kleiner als die Glasübergangstemperatur des Kunststoffmaterials der dreidimensionalen Struktur (21) ist.

## Claims

1. A security or value document (11) having a data carrier (12) formed from a plurality of layers (3, 4, 5), wherein at least two layers (3, 4, 5) are made of plastic and the layers (3, 4, 5) form a composite body,
- a three-dimensional structure (21) made of a plastic material being applied to the at least one layer (3, 4, 5) by an additive method, and
- wherein the layers (3, 4, 5) of plastic for forming the composite body have a glass transition temperature which is lower than the glass transition temperature of the plastic material of the three-dimensional structure (21), **characterized in that** a first three-dimensional structure (21) is present between the first and the second layer (3, 4; 4, 5) a first three-dimensional structure (21) and between the second and a further layer (4, 5; 3, 4) or two further layers an at least further three-dimensional structure (21) is provided.

2. Security or value document according to claim 1, **characterized in that** at least one further layer (4, 5, 3) made of plastic is applied to the three-dimensional structure (21), which has a glass transition temperature that is lower than the glass transition temperature of the plastic material of the three-dimensional structure (21).

3. Security or value document according to claim 1 or 2, **characterized in that** the three-dimensional structure (21) is formed by dots, lines, surface sections, symbols and/or geometric shapes and preferably contains color pigments and/or luminescent pigments.

4. Security or value document according to one of the preceding claims, **characterized in that** the three-dimensional structure (21) on the at least one layer (3, 4, 5) is adjacent to at least one end face (7, 8) of the layers (3, 4, 5).

5. Security or value document according to one of the preceding claims, **characterized in that** the three-dimensional structure is applied to at least one layer (3, 4, 5) and the further layer (4, 5, 3) resting thereon is transparent or transparent in sections.

6. Security or value document according to one of Claims 1 to 3, **characterized in that** the three-dimensional structure (21) is applied to at least one layer (3, 4, 5) and the further layer (4, 5, 3) resting thereon is formed in an opaque manner with at least one transparent window (24), and the three-dimensional structure (21) extends at least partially into the transparent window (24).

7. Security or value document according to any of the preceding claims, **characterized in that** the three-dimensional structure (21) is formed from a uniform plastic material or from a plurality of mutually different plastic materials.

8. Security or value document according to one of the preceding claims, **characterized in that** the three-dimensional structure (21) has a height between two layers (3, 4; 4, 5) which is smaller than the thickness of the two adjacent layers (3, 4; 4, 5).

9. Security or value document according to any one of claims 1 to 7, **characterized in that** the three-dimensional structure (21) having a height is applied to a layer of paper, paperboard or cardboard which is smaller than the thickness of the layer (3, 4, 5) of plastic which is applied to the three-dimensional structure (21).

10. Security or value document according to any of the preceding claims, **characterized in that** the three-dimensional structure (21) is applied to a height of less than 0.2 mm, preferably less than 0.05 mm.

11. Security or value document according to one of the preceding claims, **characterized in that** the three-dimensional structure (21) consists of a high-temperature-resistant thermoplastic, in particular PEEK, and at least one layer (3, 4, 5) of plastic covering the three three-dimensional structure (21) is covered by a layer (3, 4, 5) of plastic has a glass transition temperature which is lower than that of the high-temperature-resistant thermoplastic, in particular PEEK.

12. Security or value document according to one of the preceding claims, **characterized in that** a Braille writing is applied as a three-dimensional structure (21) to the at least one layer (3, 4, 5).

13. Method for producing a security or value document (11), in which a data carrier (12) is formed from a plurality of layers (3, 4, 5), at least two layers (3, 4, 5) consisting of a plastic, and the at least two layers (3, 4, 5) being joined to one another to form a composite body,
wherein a three-dimensional structure (21) made of a plastic material is applied to the at least one layer (3, 4, 5) by an additive method, the glass transition temperature of which is higher than the glass transition temperature of the layers (3, 4, 5) made of plastic, for forming the composite **characterized in that** a first three-dimensional structure (21) is provided between the first and the second layer (3, 4; 4, 5) and at least one further three-dimensional structure (21) is provided between the second and a further layer (4, 5; 3, 4) or two further layers.

14. Method according to claim 13, **characterized in that** at least one further layer (4, 5, 3) made of plastic is applied to the layer (3, 4, 5) printed with the three-dimensional structure (21), and that the layers (3, 4, 5) made of plastic are laminated to form the composite body, the three-dimensional structure (21) being retained after lamination.

15. Method according to claim 13 or 14, **characterized in that** a temperature for laminating the layers (3, 4, 5) into the composite body is controlled to be lower than the glass transition temperature of the plastic material of the three-dimensional structure (21).

## Revendications

1. Document de valeur ou de sécurité (11) avec un support de données (12), qui est formé de plusieurs couches (3, 4, 5), au moins deux couches (3, 4, 5) étant en matière plastique et les couches (3, 4, 5) formant un corps composite,
- une structure tridimensionnelle (21) en matière plastique étant appliquée sur la au moins une couche (3, 4, 5) par un procédé additif, et
- les couches (3, 4, 5) en matière plastique pour former le corps composite présentant une température de transition vitreuse qui est inférieure à la température de transition vitreuse du matériau plastique de la structure tridimensionnelle (21), **caractérisé en ce qu'**une première structure tridimensionnelle (21) est prévue entre la première et la deuxième couche (3, 4 ; 4, 5) et au moins une autre structure tridimensionnelle (21) entre la deuxième et une autre couche (4, 5 ; 3, 4) ou deux autres couches.

2. Document de valeur ou de sécurité selon la revendication 1, **caractérisé en ce qu'**au moins une autre couche (4, 5, 3) en matière plastique est appliquée sur la structure tridimensionnelle (21), laquelle présente une température de transition vitreuse qui est inférieure à la température de transition vitreuse du matériau plastique de la structure tridimensionnelle (21).

3. Document de valeur ou de sécurité selon la revendication 1 ou 2, **caractérisé en ce que** la structure tridimensionnelle (21) est formée par des points, des lignes, des portions de surface, des symboles et/ou des formes géométriques et contient de préférence des pigments colorés et/ou des pigments luminescents.

4. Document de valeur ou de sécurité selon l'une des revendications précédentes, **caractérisé en ce que** la structure tridimensionnelle (21) est adjacente à au moins une face frontale (7, 8) des couches (3, 4, 5) sur ladite au moins une couche (3, 4, 5).

5. Document de valeur ou de sécurité selon l'une des revendications précédentes, **caractérisé en ce que** la structure tridimensionnelle est appliquée sur au moins une couche (3, 4, 5) et **en ce que** l'autre couche (4, 5, 3) qui repose dessus est transparente ou transparente par sections.

6. Document de valeur ou de sécurité selon l'une des revendications 1 à 3, **caractérisé en ce que** la structure tridimensionnelle (21) est appliquée sur au moins une couche (3, 4, 5) et l'autre couche (4, 5, 3) qui la recouvre est opaque avec au moins une fenêtre transparente (24) et la structure tridimensionnelle (21) s'étend au moins partiellement dans la fenêtre transparente (24).

7. Document de valeur ou de sécurité selon l'une des revendications précédentes, **caractérisé en ce que** la structure tridimensionnelle (21) est formée d'un matériau plastique uniforme ou de plusieurs matériaux plastiques différents les uns des autres.

8. Document de valeur ou de sécurité selon l'une des revendications précédentes, **caractérisé en ce que** la structure tridimensionnelle (21) présente une hauteur entre deux couches (3, 4 ; 4, 5) qui est inférieure à l'épaisseur des deux couches (3, 4 ; 4, 5) adjacentes.

9. Document de valeur ou de sécurité selon l'une des revendications 1 à 7, **caractérisé en ce que** la structure tridimensionnelle (21) est appliquée sur une couche de papier, de carton ou de carton avec une hauteur inférieure à l'épaisseur de la couche (3, 4, 5) de matière plastique appliquée sur la structure tridimensionnelle (21).

10. Document de valeur ou de sécurité selon l'une quelconque des revendications précédentes, **caractérisé en ce que** la structure tridimensionnelle (21) est appliquée avec une hauteur inférieure à 0,2 mm, de préférence inférieure à 0,05 mm.

11. Document de valeur ou de sécurité selon l'une des revendications précédentes, **caractérisé en ce que** la structure tridimensionnelle (21) est réalisée en une matière thermoplastique résistant à haute température, notamment en PEEK, et au moins une couche (3, 4, 5) de matière plastique recouvrant la structure tridimensionnelle (21) présente une température de transition vitreuse inférieure à celle de la matière thermoplastique résistant à haute température, notamment en PEEK.

12. Document de valeur ou de sécurité selon l'une des revendications précédentes, **caractérisé en ce qu'**une écriture braille est appliquée sur ladite au moins une couche (3, 4, 5) sous la forme d'une structure tridimensionnelle (21).

13. Procédé de fabrication d'un document de valeur ou de sécurité (11), dans lequel un support de données (12) est formé de plusieurs couches (3, 4, 5), au moins deux couches (3, 4, 5) étant constituées d'une matière plastique et les au moins deux couches (3, 4, 5) étant reliées entre elles pour former un corps composite,
- une structure tridimensionnelle (21) en matière plastique étant appliquée sur la au moins une couche (3, 4, 5) par un procédé additif, dont la température de transition vitreuse est supérieure à la température de transition vitreuse des couches (3, 4, 5) constituées de matière plastique pour former le corps composite, **caractérisé en ce qu'**une structure tridimensionnelle (21) en matière plastique est appliquée entre la première et la deuxième couche (3, 4, 5) ; 4, 5), on prévoit une première structure tridimensionnelle (21) et, entre la deuxième couche et une autre couche (4, 5 ; 3, 4) ou deux autres couches, on prévoit au moins une autre structure tridimensionnelle (21).

14. Procédé selon la revendication 13, **caractérisé en ce qu'**au moins une autre couche (4, 5, 3) en matière plastique est appliquée sur la couche (3, 4, 5) imprimée avec la structure tridimensionnelle (21), et **en ce que** les couches (3, 4, 5) en matière plastique sont laminées pour former le corps composite, la structure tridimensionnelle (21) étant conservée après le laminage.

15. Procédé selon la revendication 13 ou 14, **caractérisé en ce que** l'on commande une température de stratification des couches (3, 4, 5) en corps composite qui est inférieure à la température de transition vitreuse du matériau plastique de la structure tridimensionnelle (21).
